(19) Europäisches Patentamt European Patent Office Office européen des brevets

(11) **EP 1 851 822 B1**

(12) **EUROPEAN PATENT SPECIFICATION**

(45) Date of publication and mention of the grant of the patent:
**11.07.2018 Bulletin 2018/28**

(21) Application number: **06708955.7**

(22) Date of filing: **06.02.2006**

(51) Int Cl.:
*H01Q 1/22* (2006.01)     *H01Q 7/00* (2006.01)
*H01Q 9/16* (2006.01)     *G06K 19/07* (2006.01)

(86) International application number:
**PCT/FI2006/050051**

(87) International publication number:
**WO 2006/087423 (24.08.2006 Gazette 2006/34)**

(54) **TRANSPONDER TUNING METHOD AND A TRANSPONDER**

TRANSPONDER-ABSTIMMVERFAHREN UND TRANSPONDER

PROCÉDÉ DE RÉGLAGE DE TRANSPONDEUR ET TRANSPONDEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.02.2005 FI 20050191**

(43) Date of publication of application:
**07.11.2007 Bulletin 2007/45**

(73) Proprietor: **Smartrac Investment B.V.**
**1077 XX Amsterdam (NL)**

(72) Inventors:
• **RITAMÄKI, Matti**
  **FI-37100 Nokia (FI)**
• **AHOKAS, Heikki**
  **FI-33210 Tampere (FI)**

(74) Representative: **Berggren Oy, Tampere**
**Visiokatu 1**
**33720 Tampere (FI)**

(56) References cited:
**WO-A1-2005/004044     WO-A2-2004/093243**
**JP-A- 2000 285 214     JP-A- 2001 016 022**
**JP-A- 2001 251 114     JP-A- 2004 153 717**
**US-A- 5 337 063          US-A1- 2005 024 287**

## Description

### Field of the Invention

The present invention relates to a manufacturing method for an antenna circuit comprising forming an inductance of a resonance circuit to the antenna circuit. The invention also relates to a method for tuning an antenna circuit which comprises an inductance of a resonance circuit, and a component comprising a chip impedance. The invention further relates to an antenna circuit which comprises an antenna impedance of a resonance circuit, and a component comprising a component impedance. The invention further relates to a transponder which comprises an inductance of a resonance circuit, and a component comprising a component impedance.

### Background of the Invention

Antenna circuits are implemented, for example, in transponders for different applications. A transponder is usually a small-sized equipment which comprises an antenna circuit. The antenna circuit usually comprises a resonance circuit and may also comprise an antenna, or eg the coil of the resonance circuit operates as an antenna. The transponder may further comprise a chip to/from which information can be wirelessly stored/read. The information is stored into a memory of the chip or generated e.g. by a logical circuit of the chip upon request. The energy is usually externally provided to the transponder by the reader when information is to be stored into or read from the chip. The energy is supplied to the transponder as a radio frequency (RF) energy. The antenna of the transponder receives the energy. The antenna is part of the resonance circuit wherein the energy must have a certain frequency. In the transponder the received energy is usually stored to an energy storage such as a capacitor. The stored energy suffices for the information storage/reading operation when the resonance circuit and the transmission frequency of the reader are near each other *i.e.* the resonance circuit is tuned to the transmission frequency of the reader.

There are different systems in which transponders are utilized. However, the transmission frequencies are not the same in every system. Therefore, different resonance frequencies are needed in transponders of different systems. Moreover, tolerances in the manufacturing processes of the transponders can affect that the resonance frequencies need to be tuned before the transponder is ready for use. For example, the input impedance of the chip may vary in different production batches. Further, the input impedances of the chips of different manufacturers may vary so largely that similar chips from different manufacturers can not be used with the same antenna circuit. Also the coil/antenna manufacturing and chip assembly processes may affect variations in the joint impedances which affect the resonance frequency of the transponder.

There are also other factors which may affect the resonance frequency of the transponder. For example when the transponder is placed into a housing the material of the housing may change the resonance frequency. Further, the application in which the transponder will be used may affect to the resonance frequency. Some materials such as plastics have more effect to the resonance frequency than some other materials such as cardboard. When the transponder is operating at UHF area (Ultra High Frequencies) the resonance frequency may drop about 50-100 MHz on plastic application or about 10-20 MHz on cardboard application. The same phenomenon exists also on transponders operating at HF frequencies.

There are some prior art tuning methods in which the inductance of the coil of the resonance circuit is changed by mechanically altering the coil. For example, a coil may have a number of short-circuits which can be broken to change the inductance of the coil. Hence, the transponder is measured and if it is not in resonance, one short-circuit is broken. After that the resonance frequency is measured again and another short-circuit is broken if necessary. This kind of tuning method is time consuming and needs extra production steps.

Another drawback in prior art is that the same antenna and/or coil can not be used in different kinds of systems but each system needs a specific antenna and/or coil.

The publication WO 2005/004044 discloses a transponder which comprises an antenna circuit (20) having at least an antenna coil formed on the surface of a specified basic material (11) of a printed wiring board, and an IC chip (25) mounted on an IC chip mounting part formed on the antenna circuit (20). A plurality of IC chip mounting parts are provided such that the coil length of the antenna coil becomes variable depending on the mounting position of the IC chip (25). Since the transponder can vary the coil length of the antenna coil depending on the mounting position of the IC chip (25), variation in the tuning frequency among production processes can be offset by adjusting inductance.

The patent US-5,337,063 discloses an antenna circuit for a non-contact IC card which exchanges signals with an external device utilizing electromagnetic waves. The antenna circuit includes a coil and a capacitor connected to form a resonant circuit. The coil includes a main coil having a spiral conductive pattern disposed on a peripheral portion of a substrate and a plurality of adjusting patterns, each electrically connecting a portion of the conductive pattern corresponding to a desired number of turns of the main coil to an end of the main coil. The plurality of adjusting patterns are disconnected from the main coil, except for one adjusting pattern, to obtain a coil of desired inductance. This document teaches a possibility to adjust the length and the inductance of the coil by connecting only one of the plurality of adjustment patterns.

The publication JP 2001 251114 discloses a non-contact data carrier capable of reducing the labor and time for adjusting an antenna coil. This non-contact data carrier 13 has an insulation base material 4, an antenna coil 5 formed on one surface of the material 4, a plurality of pairs 1A, 1B, 2A, 2B, 3A and 3B of pads where the intervals between one pad and the other are the same or almost the same and which are connected to the coil 5 and an IC chip 8. The plurality of respective pairs of pads are formed on the coil 5, and the number of turns of the coil 5 from the one pad to the other pad is different from one another. The pairs 1A and 1B of pads among the plurality of pairs of pads are connected to the electrode terminals of the chip 8. A conductive member or a capacitor may be mounted instead of the chip 8.

The publication JP 2000 285214 discloses a solution to adjust inductance of an antenna and to suppress deviation of resonance frequency by drawing plural connection terminals from the antenna, selectively connecting at least optional one set of the connection terminals to determine the number of windings of the antenna and adjusting an inductance value, etc., to adjust the inductance of the antenna. The antenna 2 is formed like a spiral and connection conductors 8a to 11a are arranged with every number of windings of the antenna 2. Each of the connection conductors 8a to 11a is connected with each of connection terminals 4 to 7 of an IC chip 1. For example, the number of windings of the antenna is set as four turns to specify antenna inductance here, electrical shielding is performed by providing a cutting part 12 by cutting a halfway of a printing pattern conductor 8b. The electrical shielding is similarly performed by providing a cutting part 12 by cutting a halfway of a printing pattern conductor 9b and a printing pattern conductor 11b is left by a method to provide a cutting part 14 by cutting a halfway of a printing pattern conductor 10b at last. Thus, the number of windings of the antenna 2 is set as four turns. In other words, JP 2000 285214 provides an adjustable antenna coil which can be tuned by selecting an appropriate connection terminal for the IC chip.

The publication JP 2004 153717 discloses a non-contact data transmitting/receiving body which prevents an electromagnetic wave from being shielded while a conductive part for adjusting electrostatic capacitance is provided, and is also capable of dealing with fine adjustment in addition to considerable adjustment of the electrostatic capacitance, and its capacitance adjusting method. The non-contact data transmitting/receiving body is provided with a substrate 2 composed of a first insulation member, an IC chip 3 located on one surface of the substrate 2 for controlling storage, processing and communication of data, and an antenna body 4 composed of a conductive member while connecting its both terminals to the IC chip 3, and the antenna body 4 has a plurality of circling parts 5 and a plurality of open ends 6 extending from the parts 5. Then, top ends of the plurality of open ends 6 individually form a planar portion 8 arranged while facing the circling parts via a second insulation member 7 which is mutually independently provided. The publication JP 2004 153717 only discloses how the capacitance of the resonance circuit can be adjusted by providing a multiple of capacitances and conductive members to connect a selected number of the capacitances to the resonance circuit.

The publication JP 2001 016022 discloses a method to vary a frequency to a necessary resonance frequency by setting the frequency to the necessary one higher than a prescribed frequency which is set previously by means of making a gap which is not conducted in a capacitor electrode board part. A resonance circuit 1 is provided with electrode boards 8, which are formed on both sides of an insulating film and constitute a capacitor with an insulating film and a coil 5, which is electrically connected to the electrode boards. In the resonance circuit 1, L, C and R resonance circuits corresponding to prescribed resonance frequency are formed by the capacitor and the coil 5. In the resonance circuit reacting to the frequency, a gap which is not conducted is made in an electrode board part for reducing capacitor capacity. The overall capacitor capacity is reduced by the electrode boards 8a, etc., which are cut and the necessary frequency higher than that which is set previously to be a prescribed one can be obtained. The electrode boards 8a, etc., prevent the restoration of the frequency to the original one by making them minute.

The publication US 2005/024,287 discloses a radio frequency identification tag attached to an object and comprising an antenna and an integrated circuit for providing object information to a separate reader. The antenna further comprises a pair of meanderline transmission lines each terminated at a first end for conductive connection to the integrated circuit. A shorting bar connected between the pair of meanderline transmission lines at the first ends is operative to match an antenna impedance with an integrated circuit impedance.

The publication US 2005/024,287 also discloses a shorting loop electrically connecting the pads of the integrated circuit and forming an inductive loop with the integrated circuit and the pads. The shorting loop inductance interacts with a capacitance of the integrated circuit to provide proper impedance matching between the antenna and the integrated circuit (i.e., the impedance "seen" by the integrated circuit at the pads at the tag resonant frequency). Thus the shorting loop parameters (e.g., length and width) are selected to substantially match the impedance of the integrated circuit to the impedance of the radiating structures, including the pads, the meanderlines and the other pads.

The publication WO 2004/093243 discloses an RFID tag or label which includes a wireless communication system that is mounted in electrical proximity to a dielectric material. The wireless communication system includes a wireless communication device associated with an antenna system that has at least one conductive tab, including: a plurality of electrical components forming an impedance matching network, coupled to the conducting tab and wireless communication device, that electrically interact with the dielectric material to maintain a substantial impedance match between the antenna system and the wireless communication device; and/or a structural element forming a frequency selective by-pass trap circuit formed in the conducting tab, and electrically interacting with the dielectric material to maintain the substantial impedance match. The antenna system may be directly mounted on a dielectric substrate, which serves as the dielectric material, or alternatively may be mounted on a backing layer intermediate the dielectric substrate and the antenna system.

This publication discloses a meander inductor as one solution for forming an inductance for impedance matching. The meander inductors are formed between the radiators and the chip.

Summary of the Invention

The present invention provides an improved method for tuning the resonance frequency of a resonance circuit, an antenna circuit, and a transponder. The invention as defined by the claims is based on the idea that the antenna circuit is provided with multiple of connection areas for a component such as a chip so that at least two such connection areas result a different resonance frequency when the component is assembled to such connection areas. Therefore, the selection of connection areas for connecting a component to the antenna circuit can be used to select the resonance frequency for the antenna circuit. To put it more precisely, the manufacturing method according to the present invention is primarily characterised by claim 1. The antenna circuit according to the present invention is primarily characterised by claim 6. The transponder according to the present invention is primarily characterised by claim 11. The invention provides advantages compared to prior art methods, antenna circuits and transponders. When producing the transponders according to the present invention it is not necessary to measure the resonance frequency of all the transponders of a production batch but only one or few of them because the materials and the process have a quite uniform quality. The other transponders are produced according to the measurements of the one or few samples of the transponders of the production batch. In other words, the connection areas for the chip are selected according to the measurements and all the other transponders of the same batch can be manufactured accordingly. When a different resonance frequency is needed, another connection area(s) is/are selected for the chip. The antenna circuit can comprise many connection areas in a way that the difference between the smallest and highest resonance frequency that can be achieved by the selection of the connection area of the chip can be very large. Thus, the same antenna circuits can be used in many different transponders. Therefore, bigger manufacturing volumes of similar antenna circuits can be achieved. The transponders can also be mass tailored according to the needs of customers who will use the transponders in their products, for example. One further advantage to mention is that the tuning is simpler than in prior art methods.

Same antenna circuit can be used in different technology chip attachment lines. High quality lines produce transponders with smaller parasitic capacitances, which will increase the resonance frequency. Many connection areas enable to produce optimized transponders in many production lines.

Description of the Drawings

In the following the invention will be described in more detail, by way of example only, with reference to the appended drawings, in which:-

 Figs. 1a, 1b and 1c depict different example patterns for the inductance and the connection areas of a transponder according to the present invention,

 Fig. 2 depicts the equivalent circuit of the resonance circuit of an example embodiment of the transponder, and

 Fig. 3 depicts measurement results of the effects of different connection areas to the impedance of the resonance circuit.

Detailed Description

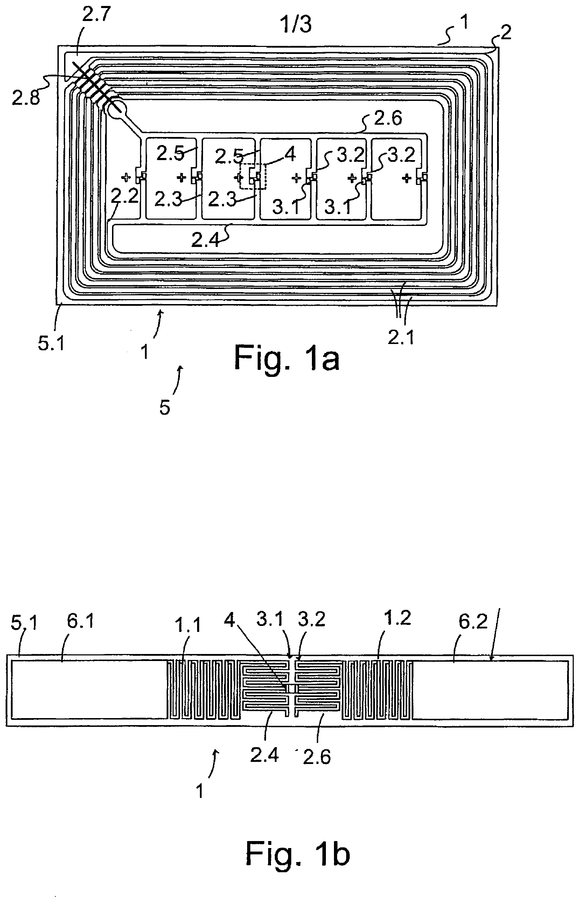

In Fig. 1a there is depicted an example of a antenna circuit 1 comprising a coil 2 of a resonance circuit and connection areas 3.1, 3.2 (such as connection pads, jointing pads, etc) for a component 4 (shown as a dotted square in Fig. 1a). The component 4 is, for example, a chip or a module comprising a chip. It is obvious that there may be more than one component and multiple connection areas for one or more of the plurality of components, as well. The antenna circuit 1 is formed on a substrate 5.1. This kind of antenna circuit is especially suitable for HF frequencies, ie frequencies between about 3 MHz to 30 MHz, typically about 13,56 MHz. The coil 2 has a number of loops 2.1 to achieve a certain basis inductance. At the first end 2.2 of the coil 2 there are a number of short conductors 2.3 connected to the coil 2 by a conductor 2.4. At the other end of the each conductor 2.3 there is a connection area 3.1 for the component 4. Near each of these connection areas 3.1 there is another connection area 3.2 for the component 4. Those other connection areas 3.2 are formed at the end of another set of conductors 2.5 which in turn are electrically connected together by a conductor 2.6. This conductor 2.6 is connected to the other end 2.7 of the coil by a wire 2.8, for example. The component 4 has two or more connection elements, such as leads, connection pads, etc for connecting the component 4 to the other electronic circuitry. When the component 4 is eg bonded at the connection elements to the connection areas of the transponder, the component is fixed to the transponder and usually no other fixing means are necessary.

The component 4 can be connected to any of the pair of adjacent connection areas 3.1, 3.2. Inside the component 4 there are usually rectifier diodes and other semiconductor components (e.g. switching transistors, memory, etc., not shown in Fig. 1a) which typically affect that there exists a capacitive input impedance. The connection areas 3.1, 3.2 for the component 4 are selected according to the resonance frequency designed for the transponder 5. In the embodiment of Fig. 1a the highest resonance frequency can be achieved by joining the component to the pair of connection areas which form the longest coil *i.e.* the connection areas which are at the right end of the conductors 2.6 in Fig. 1a, because the area of the coil becomes smaller in this alternative. Respectively, the lowest resonance frequency can be achieved by joining the component 4 to the pair of the connection areas which form the shortest coil *i.e.* the leftmost pair of connection areas in Fig. 1a, because the area of the coil becomes larger in this alternative.

In Fig. 1b another example of the antenna circuit 1 according to the present invention is shown. This kind of antenna circuit is especially suitable for UHF frequencies, ie frequencies over 300 MHz up to 3000 MHz, typically around 900 MHz. In this embodiment the coil 2 is electrically as a dipole antenna having two radiators 6.1, 6.2. In both radiators 6.1, 6.2 of the dipole antenna there are lengthening coils 1.1, 1.2 which increase the electric length of the dipole antenna. At the other end of the lengthening coils 1.1, 1.2 there are conductors 2.4, 2.6 and a number of connection areas 3.1, 3.2 in different locations of the conductors 2.4, 2.6. The connection areas 3.1, 3.2 allow the selection of the connection area of the component 4 in the similar way than in the above described example of Fig. 1a. The selection of the connection area affects to the inductance of the resonance circuit which is mainly formed by the dipole antenna and the capacitance between the conducting points of the component 4.

In principle there are at least two ways to affect to the inductance to the antenna circuit. One is to change the operational (electric) length of the antenna and another way is to change serial inductance of the antenna circuit. It is also possible to use both of them.

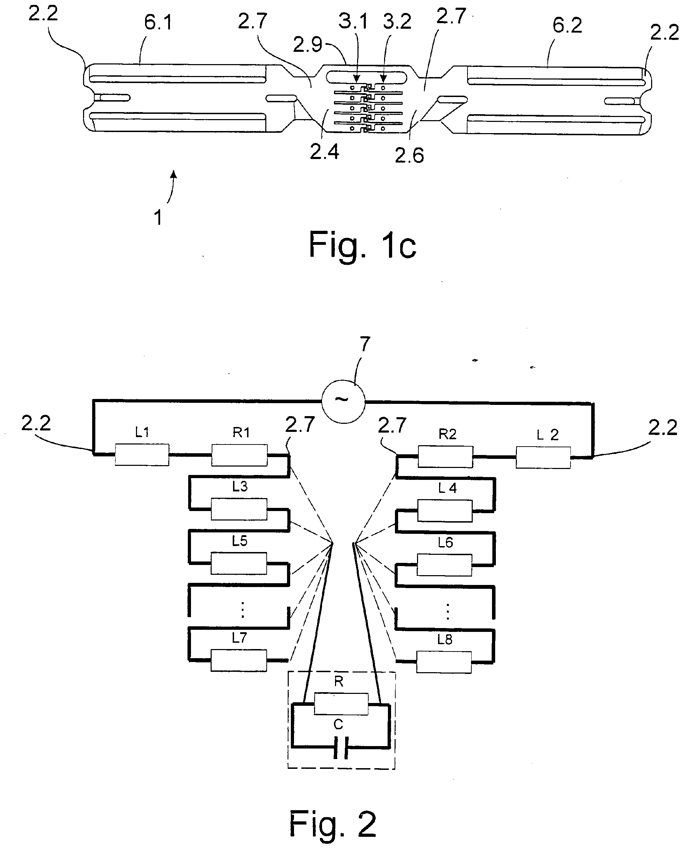

In Fig. 1c yet another example of the antenna circuit 1 according to the present invention is shown. This kind of antenna circuit is also especially suitable for UHF frequencies. The coil or antenna 1 is electrically as a dipole antenna having two radiators 6.1, 6.2. At one end of the radiators 6.1, 6.2 there are conductors 2.4, 2.6 and a number of connection areas 3.1, 3.2 in different locations of the conductors 2.4, 2.6. The connection areas 3.1, 3.2 allow the selection of the connection area for the component 4 in the similar way than in the above described examples of Figs. 1a and 1b. The selection of the connection area affects to the area of the loop which is formed by the selected connection areas 3.1, 3.2, the conductors 2.4, 2.6 and the loop conductor 2.9. Therefore, the inductance of the resonance circuit is also varied according to the selection of the connection areas 3.1, 3.2 for the component 4.

Fig. 2 depicts an equivalent circuit of an example of the antenna circuit 1 of Fig. 1b according to the present invention. There are the inductances L1, L2 which consist of the radiators 6.1, 6.2 and the lengthening coils 1.1, 1.2. There is also some resistance in the coils, radiators and conductors which is represented as resistors R1, R2 in Fig. 2. The resistances consist inter alia of loss resistance and radiation resistance. Each of the conductors connecting two connection areas 3.1, 3.2 also have some inductance L3-L8. The component 4 has some capacitive input impedance R, C which affect the operation of the circuit of the transponder. The energy generator 7 represents the reader or some other device which produces the RF energy for the transponder. Although the generator 7 is shown as connected to the antenna in Fig. 2, the generator 7 is not connected to the transponder 5 in normal operation but the energy is radiated from the generator to the transponder 5.

Mathematically the effect of the selection of the connection points to which the component is assembled can be presented, for example, by the following equation:

$$f_c = \frac{1}{2\pi\sqrt{C\left(L_{ant} + \sum L_{connectionpo\,int}\right)}}$$

In the equation the term $f_c$ represents the resonance frequency, C represents the capacitance of the input impedance of the component, the term $L_{ant}$ represents the inductance of the radiators, and the term $\sum L_{connectionpo\,int}$ represents the sum of the inductances of the connection points which are selected for connecting the component 4 to the antenna circuit 1.

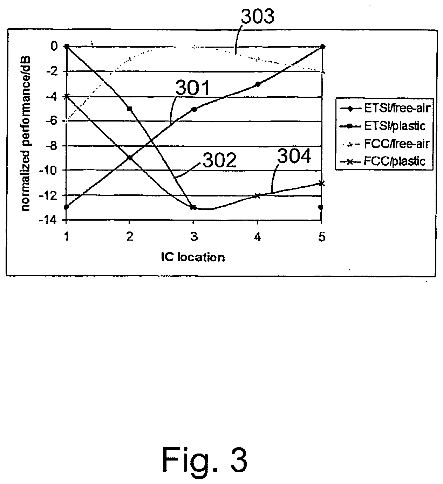

Fig. 3 depicts some measurement results of an example embodiment of the present invention. In Fig. 3 the curve 301 represents the normalised performance as a function of selected connection points (IC location) at a first frequency area (869 MHz) when the antenna circuit is in free air ie it is not attached to the application material. In this non-restrictive example five selectable locations have been measured. It can be seen that in this example the best results are achieved when the component is connected to the fifth pair of connection areas. The curve 302 represents the normalised performance as a function of selected connection points at the first frequency area (869 MHz) when the antenna circuit is covered by a plastic plate. In this alternative the best results are achieved when the component is connected to the first pair of connection areas. The curve 303 represents the normalised performance as a function of selected connection points at a second frequency area (902MHz-928MHz) when the antenna circuit is in free air. In this alternative the third pair of connection areas gives the best results. The curve 304 represents the normalised performance as a function of selected connection points at the second frequency area (902MHz-928MHz) when the antenna circuit is covered by a plastic plate. In this alternative the first pair of connection areas gives the best results.

A number of prior art manufacturing methods can be used in manufacturing the antenna circuits of the present invention. It should also be mentioned that the different parts of the resonance circuit on the antenna circuit 1, such as coils 2, radiators 6.1, 6.2, conductors 2.4, 2.6, connection areas 3.1, 3.2, can be manufactured in the same phase. Therefore, no extra steps are needed for providing the tuning possibility for the transponder 5. The component 4 can also be joined to the antenna circuit 1 by using soldering, adhesive or any suitable method known as such. The component 4 can also be formed as a module which is then attached to the transponder. Such a module comprises, for example, a substrate in a strap form in which the necessary electrical connections are arranged for electrically connecting the chip of the module to the transponder. This kind of module containing the chip can also be called as a strap or a strap module, for example.

The resonance frequency can vary in large scale. For example, the transponder 5 can be designed to operate at 869 MHz systems and at 915 MHz systems which are common frequencies in UHF frequency area. The invention is also applicable at HF frequencies, typically 13,56 MHz.

There are many application areas for the present invention. As a non-limiting example of the application areas the transponder can be made for so called RFID applications (Radio Frequency Identification).

**Claims**

1. A method for manufacturing an antenna circuit (1) having a component (4), said method comprising

    - forming an inductance (L1, L2) of a resonance circuit to the antenna circuit;
    - forming a multiple of connection areas (3.1, 3.2) for connecting the component (4) to the antenna circuit, at least two of said multiple of connection areas (3.1, 3.2) being part of the resonance circuit wherein each connection area comprises a first connection pad (3.1) and a second connection pad (3.2); and
    - forming said inductance (L1, L2) of the resonance circuit as a dipole antenna comprising two radiators (6.1, 6.2), said radiators (6.1, 6.2) comprising at least a first end (2.2) and a second end (2.7); and
    - forming a conductor (2.4, 2.6) between said second end (2.7) of each of said two radiators (6.1, 6.2) and said multiple of connection areas (3.1, 3.2); and
    - connecting the component (4) to at least two of said multiple of connection areas (3.1, 3.2); and
    - forming a loop conductor (2.9) between said radiators (6.1, 6.2), **characterised in that** the method further comprises:

        - forming the connection areas in such a way that each connection area (3.1, 3.2) together with the conductors (2.4, 2.6) and the loop conductor (2.9) forms a loop, and that the length of the two radiators (6.1, 6.2) remains the same.

2. A method according to claim 1, **characterised in that** the method further comprises using a chip as said component.

3. A method according to claim 1, **characterised in that** the method further comprises using a module comprising a chip as said component.

4. A method according to any of the claims 1 to 3, **characterised in that** the method comprises forming lengthening coils (1.1) to connect the radiators (6.1, 6.2) of the dipole with said multiple of connection areas for the chip.

5. A method according to claim 1, **characterised in that** the method comprises selecting at least one connection area (3.1, 3.2) for the component (4) amongst said at least two of said multiple of connection areas (3.1, 3.2).

6. An antenna circuit comprising an antenna impedance of a resonance circuit and a component (4), said resonance circuit comprising an inductance (L1, L2), said antenna circuit comprising a multiple of connection areas (3.1, 3.2) for connecting the component (4) to the antenna circuit (1), the component (4) comprising a component impedance, at least two of said multiple of connection areas being part of the resonance circuit, and said inductance (L1, L2) of the resonance circuit is a dipole antenna comprising two radiators (6.1, 6.2), said radiators (6.1, 6.2) comprising at least a first end (2.2) and a second end (2.7), a conductor (2.4, 2.6) between said second end (2.7) of each of said two radiators (6.1, 6.2) and said multiple of connection areas (3.1, 3.2), wherein the component (4) is connected to at least two of said multiple of connection areas (3.1, 3.2), and the antenna circuit comprises a loop conductor (2.9) between said radiators (6.1, 6.2), and conductors (2.4, 2.6) between the radiators (6.1, 6.2) and the connection areas (3.1, 3.2), **characterized in that** the connection areas are configured in such a way that each connection area (3.1, 3.2) together with the conductors (2.4, 2.6) and the loop conductor (2.9) forms a loop, and that the length of the two radiators (6.1, 6.2) remains the same.

7. An antenna circuit according to claim 6, **characterized in that** the antenna circuit comprises lengthening coils (1.1, 1.2) connected at one end to the radiators (6.1, 6.2) and at the other end to one of the connection areas (3.1, 3.2), and that the connection areas (3.1, 3.2) are connected to another connection area (3.1, 3.2) by a conductor (2.4, 2.6).

8. An antenna circuit according to claim 6, **characterized in that** the each connection area together with the loop conductor (2.9) forms a loop in such a way that the area of the cross section of the loops differs from each other.

9. An antenna circuit according to claim 6, **characterized in that** the component (4) is a chip.

10. An antenna circuit according to claim 6, **characterized in that** the component (4) is a module comprising a chip.

11. A transponder which comprises the antenna circuit of any of the claims 6 to 10.

12. A transponder according to claim 11, **characterized in that** the transponder comprises lengthening coils (1.1, 1.2) connected at one end to the radiators (6.1, 6.2) and at the other end to one of the connection areas (3.1, 3.2), and that the connection areas (3.1, 3.2) are connected to another connection area (3.1, 3.2) by a conductor (2.4, 2.6).

13. A transponder according to claim 11, **characterized in that** the transponder comprises the loop conductor (2.9) between the radiators (6.1, 6.2), and that the connection areas (3.1, 3.2) are formed in such a way that each connection area (3.1, 3.2) together with the loop conductor (2.9) forms a loop, and that the area of the cross section of the loops differs from each other.

14. A transponder according to claim 11, **characterized in that** it comprises a module comprising a chip (4), and that the module is attached with the transponder.

**Patentansprüche**

1. Ein Verfahren zur Herstellung eines Antennenstromkreises (1) mit einer Komponente (4), wobei das Verfahren Folgendes umfasst:

- Bilden einer Induktivität (L1, L2) eines Resonanzkreises mit dem Antennenstromkreis;

- Bilden einer Vielzahl von Verbindungsflächen (3.1, 3.2) zum Verbinden der Komponente (4) mit dem Antennenstromkreis, wobei mindestens zwei der Vielzahl der Verbindungsflächen (3.1, 3.2) Teil des Resonanzkreises sind, wobei jede Verbindungsfläche ein erstes Anschlusspad (3.1) und ein zweites Anschlusspad (3.2) aufweist; und

- Bilden der Induktivität (L1, L2) des Resonanzkreises als eine Dipolantenne mit zwei Strahlern (6.1, 6.2), wobei die Strahler (6.1, 6.2) mindestens ein erstes Ende (2.2) und ein zweites Ende (2.7) aufweisen; und

- Bilden eines Leiters (2.4, 2.6) zwischen dem zweiten Ende (2.7) eines jeden der beiden Strahler (6.1, 6.2) und der Vielzahl von Verbindungsflächen (3.1, 3.2); und

- Verbinden der Komponente (4) mit mindestens zwei der Vielzahl der Verbindungsflächen (3.1, 3.2); und

- Bilden eines Schleifenleiters (2.9) zwischen den Strahlern (6.1, 6.2),

**dadurch gekennzeichnet, dass** das Verfahren darüber hinaus Folgendes umfasst:

- Bilden der Verbindungsflächen derart, dass jede Verbindungsfläche (3.1, 3.2) zusammen mit den Leitern (2.4, 2.6) und dem Schleifenleiter (2.9) eine Schleife bildet, und dass die Länge der beiden Strahler (6.1, 6.2) gleich bleibt.

2. Verfahren gemäß Anspruch 1, **dadurch gekennzeichnet, dass** das Verfahren darüber hinaus einen Chip als die Komponente verwendet.

3. Verfahren gemäß Anspruch 1, **dadurch gekennzeichnet, dass** das Verfahren darüber hinaus die Verwendung eines Moduls umfasst, welches einen Chip als die Komponente aufweist.

4. Verfahren gemäß einem der Ansprüche 1 bis 3, **dadurch gekennzeichnet, dass** das Verfahren das Bilden von Verlängerungsspulen (1.1) zum Verbinden der Strahler (6.1, 6.2) des Dipols mit der Vielzahl von Verbindungsflächen für den Chip umfasst.

5. Verfahren gemäß Anspruch 1, **dadurch gekennzeichnet, dass** das Verfahren das Auswählen von mindestens einer Verbindungsfläche (3.1, 3.2) für die Komponente (4) unter den mindestens zwei der Vielzahl von Verbindungsflächen (3.1, 3.2) umfasst.

6. Ein Antennenstromkreis mit einer Antennenimpedanz eines Resonanzkreises und einer Komponente (4), wobei der Resonanzkreis eine Induktivität (L1, L2) aufweist, wobei der Antennenstromkreis eine Vielzahl von Verbindungsflächen (3.1, 3.2) zum Verbinden der Komponente (4) mit dem Antennenstromkreis (1) aufweist, wobei die Komponente (4) eine Komponentenimpedanz hat, wobei mindestens zwei der Vielzahl von Verbindungsflächen ein Teil des Resonanzkreises sind, und wobei die Induktivität (L1, L2) des Resonanzkreises eine Dipolantenne mit zwei Strahlern (6.1, 6.2) ist, wobei die Strahler (6.1 6.2) mindestens ein erstes Ende (2.2) und ein zweites Ende (2.7), einen Leiter (2.4, 2.6) zwischen dem zweiten Ende (2.7) eines jeden der zwei Strahler (6.1, 6.2) und der Vielzahl von Verbindungsflächen (3.1, 3.2) aufweisen, wobei die Komponente (4) mit mindestens zwei der Vielzahl der Verbindungsflächen (3.1, 3.2) verbunden ist, und der Antennenstromkreis einen Schleifenleiter (2.9) zwischen den Strahlern (6.1, 6.2) und Leiter (2.4, 2.6) zwischen den Strahlern (6.1, 6.2) und den Verbindungsflächen (3.1, 3.2) aufweist, **dadurch gekennzeichnet, dass** die Verbindungsflächen so konfiguriert sind, dass jede Verbindungsfläche (3.1, 3.2) zusammen mit den Leitern (2.4, 2.6) und dem Schleifenleiter (2.9) eine Schleife bildet, und dass die Länge der beiden Strahler (6.1, 6.2) gleich bleibt.

7. Antennenstromkreis gemäß Anspruch 6, **dadurch gekennzeichnet, dass** der Antennenstromkreis Verlängerungsspulen (1.1, 1.2) aufweist, die an einem Ende mit den Strahlern (6.1, 6.2) und am anderen Ende mit einer der Verbindungsflächen (3.1, 3.2) verbunden sind, und dass die Verbindungsflächen (3.1, 3.2) mit einer anderen Verbindungsfläche (3.1, 3.2) über einen Leiter (2.4, 2.6) verbunden sind.

8. Antennenstromkreis gemäß Anspruch 6, **dadurch gekennzeichnet, dass** jede Verbindungsfläche zusammen mit dem Schleifenleiter (2.9) eine Schleife der Art bildet, dass die Flächen des Querschnitts der Schleifen voneinander abweichen.

9. Antennenstromkreis gemäß Anspruch 6, **dadurch gekennzeichnet, dass** die Komponente (4) ein Chip ist.

10. Antennenstromkreis gemäß Anspruch 6, **dadurch gekennzeichnet, dass** die Komponente (4) ein Modul mit einem Chip ist.

11. Ein Transponder, der den Antennenstromkreis gemäß einem der Ansprüche 6 bis 10 aufweist.

12. Transponder gemäß Anspruch 11, **dadurch gekennzeichnet, dass** der Transponder Verlängerungsspulen (1.1, 1.2) aufweist, die an einem Ende mit den Strahlern (6.1, 6.2) und an dem anderen Ende mit einer der Verbindungsflächen (3.1, 3.2) verbunden sind, und dass die Verbindungsflächen (3.1, 3.2) mit einer anderen Verbindungsfläche (3.1, 3.2) über einen Leiter (2.4, 2.6) verbunden sind.

13. Transponder gemäß Anspruch 11, **dadurch gekennzeichnet, dass** der Transponder den Schleifenleiter (2.9) zwischen den Strahlern (6.1, 6.2) aufweist, und dass die Verbindungsflächen (3.1, 3.2) so gebildet sind, dass jede Verbindungsfläche (3.1, 3.2) zusammen mit dem Schleifenleiter (2.9) eine Schleife bildet, und dass die Flächen des Querschnitts der Schleifen voneinander abweichen.

14. Transponder gemäß Anspruch 11, **dadurch gekennzeichnet, dass** er ein Modul mit einem Chip (4) aufweist und dass das Modul am Transponder befestigt ist.

**Revendications**

1. Procédé pour fabriquer un circuit d'antenne (1) qui comporte un composant (4), ledit procédé comprenant :

   - la formation d'une inductance (L1, L2) d'un circuit de résonance pour le circuit d'antenne ;
   - la formation de multiples zones de connexion (3.1, 3.2) pour connecter le composant (4) au circuit d'antenne, au moins deux desdites multiples zones de connexion (3.1, 3.2) étant une partie du circuit de résonance, dans lequel chaque zone de connexion comprend un premier plot de connexion (3.1) et un second plot de connexion (3.2) ; et
   - la formation de ladite inductance (L1, L2) du circuit de résonance en tant qu'antenne dipolaire qui comprend deux éléments rayonnants (6.1, 6.2), lesdits éléments rayonnants (6.1, 6.2) comprenant au moins une première extrémité (2. 2) et une seconde extrémité (2.7) ; et
   - la formation d'un conducteur (2.4, 2.6) entre ladite seconde extrémité (2.7) de chacun desdits deux éléments rayonnants (6.1, 6.2) et lesdites multiples zones de connexion (3.1, 3.2) ; et
   - la connexion du composant (4) aux au moins deux desdites multiples zones de connexion (3.1, 3.2) ; et
   - la formation d'un conducteur en boucle (2.9) entre lesdits éléments rayonnants (6.1, 6.2) ;

   **caractérisé en ce que** le procédé comprend en outre :

   - la formation des zones de connexion de telle sorte que chaque zone de connexion (3.1, 3.2), en association avec les conducteurs (2.4, 2.6) et le conducteur en boucle (2.9), forme une boucle, et que la longueur des deux éléments rayonnants (6.1, 6.2) reste la même.

2. Procédé selon la revendication 1, **caractérisé en ce**

**que** le procédé comprend en outre l'utilisation d'une puce en tant que dit composant.

3. Procédé selon la revendication 1, **caractérisé en ce que** le procédé comprend en outre l'utilisation d'un module qui comprend une puce en tant que dit composant.

4. Procédé selon l'une quelconque des revendications 1 à 3, **caractérisé en ce que** le procédé comprend la formation de bobines d'allongement (1.1) pour connecter les éléments rayonnants (6.1, 6.2) du dipôle avec lesdites multiples zones de connexion pour la puce.

5. Procédé selon la revendication 1, **caractérisé en ce que** le procédé comprend la sélection d'au moins une zone de connexion (3.1, 3.2) pour le composant (4) qui est prise parmi lesdites au moins deux desdites multiples zones de connexion (3.1, 3.2).

6. Circuit d'antenne comprenant une impédance d'antenne d'un circuit de résonance et un composant (4), ledit circuit de résonance comprenant une inductance (L1, L2), ledit circuit d'antenne comprenant de multiples zones de connexion (3.1, 3.2) pour connecter le composant (4) au circuit d'antenne (1), le composant (4) comprenant une impédance de composant, au moins deux desdites multiples zones de connexion étant une partie du circuit de résonance, et ladite inductance (L1, L2) du circuit de résonance est une antenne dipolaire qui comprend deux éléments rayonnants (6.1, 6.2), lesdits éléments rayonnants (6.1, 6.2) comprenant au moins une première extrémité (2.2) et une seconde extrémité (2.7), un conducteur (2.4, 2.6) entre ladite seconde extrémité (2.7) de chacun desdits deux éléments rayonnants (6.1, 6.2) et lesdites multiples zones de connexion (3.1, 3.2), dans lequel le composant (4) est connecté à au moins deux desdites multiples zones de connexion (3.1, 3.2), et le circuit d'antenne comprend un conducteur en boucle (2.9) entre lesdits éléments rayonnants (6.1, 6.2), et des conducteurs (2.4, 2.6) entre les éléments rayonnants (6.1, 6.2) et les zones de connexion (3.1, 3.2) ;
**caractérisé en ce que** :
les zones de connexion sont configurées de telle sorte que chaque zone de connexion (3.1, 3.2), en association avec les conducteurs (2.4, 2.6) et le conducteur en boucle (2.9), forme une boucle, et que la longueur des deux éléments rayonnants (6.1, 6.2) reste la même.

7. Circuit d'antenne selon la revendication 6, **caractérisé en ce que** le circuit d'antenne comprend des bobines d'allongement (1.1, 1.2) qui sont connectées au niveau d'une extrémité aux éléments rayonnants (6.1, 6.2) et au niveau de l'autre extrémité à l'une des zones de connexion (3.1, 3.2), et **en ce que** les zones de connexion (3.1, 3.2) sont connectées à une autre zone de connexion (3.1, 3.2) par un conducteur (2.4, 2.6).

8. Circuit d'antenne selon la revendication 6, **caractérisé en ce que** chaque zone de connexion, en association avec le conducteur en boucle (2.9), forme une boucle de telle sorte que les aires des coupes transversales des boucles diffèrent les unes des autres.

9. Circuit d'antenne selon la revendication 6, **caractérisé en ce que** le composant (4) est une puce.

10. Circuit d'antenne selon la revendication 6, **caractérisé en ce que** le composant (4) est un module qui comprend une puce.

11. Transpondeur, lequel comprend le circuit d'antenne selon l'une quelconque des revendications 6 à 10.

12. Transpondeur selon la revendication 11, **caractérisé en ce que** le transpondeur comprend des bobines d'allongement (1.1, 1.2) qui sont connectées au niveau d'une extrémité aux éléments rayonnants (6.1, 6.2) et au niveau de l'autre extrémité à l'une des zones de connexion (3.1, 3.2), et **en ce que** les zones de connexion (3.1, 3.2) sont connectées à une autre zone de connexion (3.1, 3.2) par un conducteur (2.4, 2.6).

13. Transpondeur selon la revendication 11, **caractérisé en ce que** le transpondeur comprend le conducteur en boucle (2.9) entre les éléments rayonnants (6.1, 6.2), et **en ce que** les zones de connexion (3.1, 3.2) sont formées de telle sorte que chaque zone de connexion (3.1, 3.2), en association avec le conducteur en boucle (2.9), forme une boucle, et **en ce que** les aires des coupes transversales des boucles diffèrent les unes des autres.

14. Transpondeur selon la revendication 11, **caractérisé en ce qu'**il comprend un module qui comprend une puce (4), et **en ce que** le module est fixé au transpondeur.

1/3

Fig. 1a

Fig. 1b

Fig. 1c

Fig. 2

Fig. 3

**EP 1 851 822 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005004044 A
- US 5337063 A
- JP 2001251114 A
- JP 2000285214 A
- JP 2004153717 A
- JP 2001016022 A
- US 2005024287 A
- WO 2004093243 A